# EUROPÄISCHE PATENTANMELDUNG

(11) **EP 1 170 946 A2**
(43) Veröffentlichungstag der Anmeldung: **09.01.2002**
(21) Anmeldenummer: 01115551.2
(22) Anmeldetag: 28.06.2001
(51) Int. Cl.: H04N 5/783

(54) **Verfahren und Vorrichtung zur Aufzeichnung und Wiedergabe**

(30) Priorität: 05.07.2000 DE 10032722
(71) Anmelder: Grundig AG, 90471 Nürnberg (DE)
(72) Erfinder: Dilg, Andreas, 90471 Nürnberg (DE)

(57) **Zusammenfassung**

Die vorliegende Erfindung betrifft ein Verfahren und eine Vorrichtung zur Aufzeichnung und Wiedergabe von digitalen audiovisuellen Daten.

Von bekannten Verfahren und Vorrichtungen geben keine Hinweise, wie digitale audiovisuelle Daten aufgezeichnet werden können, um die Wiedergabe auch in besonderen Betriebsmodi zu ermöglichen, wenn die digitalen audiovisuellen Daten codiert sind, z. B. nach MPEG.

Die vorliegende Erfindung löst dieses Problem dadurch, daß zusammen mit den codierten digitalen audiovisuellen Daten codierungsspezifische Informationen aufgezeichnet werden, die geeignet sind Bilder in beliebiger und wahlfreier Reihenfolge sowie mit beliebiger Geschwindigkeit wiederzugeben.

## Beschreibung

Die vorliegende Erfindung betrifft ein Verfahren und eine Vorrichtung zur Aufzeichnung und Wiedergabe von digitalen audiovisuellen Daten.

Es ist bekannt, digitale audiovisuelle Daten auf Massenspeichermedien wie Festplatte (Hard Disk, HD) oder beschreibbaren optischen Speichern zu speichern. Bei der Wiedergabe derartiger digitaler audiovisueller Daten treten vor allem bei der Wiedergabe in besonderen Wiedergabemodi, wie z. B. Zeitlupe voroder rückwärts, schneller Bildvor- oder Bildrücklauf usw., Probleme auf, weil es dazu nötig ist, über genaue Informationen der aufgezeichneten einzelnen Bilder der digitalen audiovisuellen Daten zu verfügen. Weitere Probleme treten auf, wenn bestimmte Bilder oder Bildabschnitte gezielt wiedergegeben werden sollen.

Aus EP 0 859 365 A2 ist ein Verfahren und eine Vorrichtung zur Aufzeichnung und Wiedergabe bekannt, die dazu dient, digitale audiovisuelle Daten aufzuzeichnen. Um die Wiedergabe in speziellen Wiedergabemodi zu erlauben, wird während der Aufzeichnung der einzelnen Bilder der digitalen audiovisuellen Daten zusätzlich eine Information erzeugt und mit aufgezeichnet, welche den Speicheradressen der einzelnen Bilder der digitalen audiovisuellen Daten entsprechen. Bei der Wiedergabe können dann die Daten bestimmter Bilder mittels der Speicheradressen gezielt aus dem Speicher ausgelesen werden.

Der bekannte Stand der Technik weist jedoch den Nachteil auf, daß keine Angaben gemacht werden, wie digitale audiovisuelle Daten aufgezeichnet werden können, um die Wiedergabe auch in besonderen Betriebsmodi zu ermöglichen, wenn die digitalen audiovisuellen Daten codiert sind, z. B. nach MPEG.

Es ist daher Aufgabe der vorliegenden Erfindung, ein Verfahren und eine Vorrichtung zur Aufzeichnung und Wiedergabe von digitalen audiovisuellen Daten anzugeben, die zur Aufzeichnung und Wiedergabe codierter digitaler audiovisueller Daten geeignet sind.

Bei der vorliegenden Erfindung wird diese Aufgabe durch die Merkmale der Ansprüche 1 und 6 gelöst.

Bei der Erfindung wird dabei von der Überlegung ausgegangen, daß zusammen mit den codierten digitalen audiovisuellen Daten codierungsspezifische Informationen aufgezeichnet werden.

Der Vorteil der Erfindung ist darin zu sehen, daß es bei der Wiedergabe möglich ist, die codierungsspezifischen Informationen dazu zu benutzen, Bilder in beliebiger und wahlfreier Reihenfolge sowie mit beliebiger Geschwindigkeit wiederzugeben.

Bei einer vorteilhaften Weiterbildung werden zusammen mit den digitalen audiovisuellen Daten Zusatzdaten aufgezeichnet, welche Informationen über die audiovisuellen Daten enthalten. Bei der Wiedergabe ist es durch Auswertung der Zusatzdaten sowie der codierungsspezifischen Informationen möglich, gezielt bestimmte Teile der audiovisuellen Daten auszuwählen und wiederzugeben.

Weitere Vorteile der vorliegenden Erfindung ergeben sich aus den abhängigen Ansprüchen sowie der nachfolgenden Beschreibung einer Ausführungsform einer erfindungsgemäßen Vorrichtung anhand von Figuren.

Es zeigt:
- Fig. 1: ein Prinzipschaltbild eines Ausführungsbeispiels einer Vorrichtung zur Aufzeichnung und Wiedergabe von digitalen audiovisuellen Daten, bei der Aufzeichnung codierter digitaler audiovisueller Daten,
- Fig. 2: ein Prinzipschaltbild eines Ausführungsbeispiels einer Vorrichtung zur Aufzeichnung und Wiedergabe von digitalen audiovisuellen Daten, bei der Wiedergabe codierter digitaler audiovisueller Daten, und
- Fig. 3: einen möglichen Aufbau von codierten digitalen audiovisuellen Daten.

Zur Erleichterung des Verständnisses der vorliegenden Erfindung sind in den Figuren nur die Bestandteile des Ausführungsbeispiels dargestellt, die im Zusammenhang mit der Erfindung von Bedeutung sind. Gleichartige Bestandteile in unterschiedlichen Figuren weisen die selben Bezugszeichen auf.

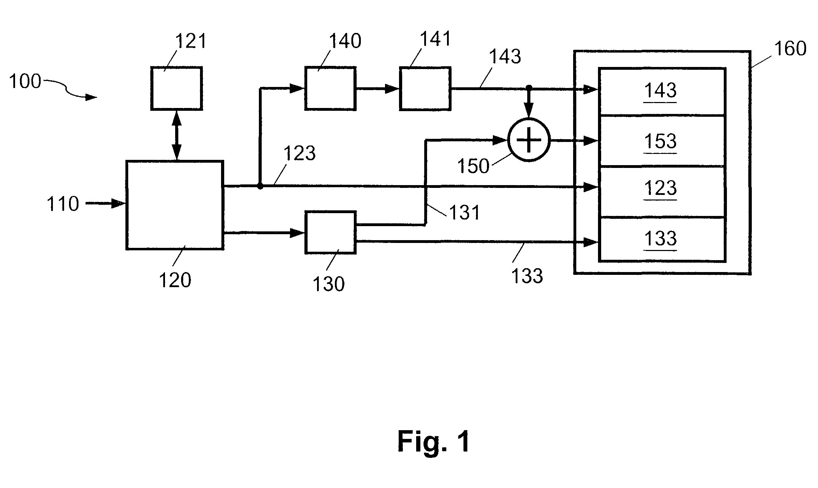

Figur1 zeigt ein Prinzipschaltbild eines Ausführungsbeispiels einer Vorrichtung 100 zur Aufzeichnung und Wiedergabe von digitalen audiovisuellen Daten, bei der Aufzeichnung codierter digitaler audiovisueller Daten. Die codierten digitalen audiovisuellen Daten können beispielsweise in einem DVB-Transportdatenstrom (DVB: Digital Video Broadcasting) enthalten sein, der mehrere nach MPEG (MPEG: Motion Picture Expert Group) codierte digitale audiovisuelle Datenströme enthält. Jeder der codierten digitalen audiovisuellen Datenströme entspricht dabei beispielsweise einem Programm oder Filmbeitrag.

Die Vorrichtung 100 zur Aufzeichnung enthält einen ersten Demultiplexer 120 (Transportdemultiplexer), zur Auftrennung eines Transportdatenstroms 110 in einzelne codierte digitale audiovisuelle Datenströme 123, nachfolgend Programmdaten genannt. Die Programmdaten 123 enthalten Audiodaten, Videodaten, Referenzzeitangaben PCR (Program Clock Reference) und zusätzliche Daten, wie programmspezifische Daten PSI (Program Specific Information) und senderspezifische Daten SI (Service Information). Mit den Referenzzeitangaben wird von einer Einrichtung 121 zur Taktrückgewinnung ein Systemtakt aus dem Transportdatenstrom 110 zurückgewonnen. Die Einrichtung 121 leitet aus dem zurückgewonnenen Systemtakt weiterhin Zeitstempel ab, die jedes TS-Paket (Transportstrom Paket) kennzeichnen. Die Zeitstempel werden den Programmdaten 123 hinzugefügt. Die Programmdaten 123 werden in einem dritten Bereich 123 eines Speichermediums 160, z. B. einer Festplatte (HD), eines beschreibbaren optischen Speichers oder eines geeigneten Festkörperspeichers, aufgezeichnet. Aus den Programmdaten 123 werden mittels eines weiteren Demultiplexers 140 die Videodaten gewonnen. Die Videodaten werden mittels einer Einrichtung 141 (Video-Parser) analysiert, so daß für jedes einzelne Videobild Indexinformationen 143, wie z. B. die Speicheradresse des Bildanfangs auf der HD 160, die vorgegebene Zeit (Zahl der Frames), die ein Bild gezeigt werden soll, den Typ des Bildes (bei MPEG: I, P, B) und Anfang einer neuen Bildsequenz, zur Verfügung stehen. Ein Bildindex, der die Indexinformationen der einzelnen Videobilder enthält, wird in einem ersten Bereich 143 der HD 160 gespeichert.

Der Transportdemultiplexer 120 liefert außerdem Informationen über das jeweilige Programm. Diese PSI/SI-Informationen (Program Specific Information, Informationen über welche man die Komponenten des Multiplexes identifizieren kann) werden von einer Einrichtung 130 (PSI/PS-Parser) ausgewertet und Angaben wie Sendernamen, PIDs (Packet Identifier; einer Identifikationsnummer, über welche die Nutzdaten eines TS-Paketes zu einer Komponente aus dem Multiplex-Transportstrom zugeordnet werden, z.B. Videodaten eines Programmes), Start- und Endzeit, Herkunft (NIT-Info; Network Information Table; Informationen zum Netzwerk, wie physikalische Parameter, zum Empfang von Transportströmen) usw. werden zur Verfügung gestellt. Die Programminformationen 133 der Einrichtung 130 werden in einem vierten Bereich 133 der HD 160 aufgezeichnet.

Mittels einer Verknüpfungseinrichtung 150 werden die Programminformationen 133 mit den Indexinformationen 143 des Bildindex bzw. den zugrunde liegenden Programmdaten verknüpft, so daß zu jeder Zeit die einzelnen Programme bzw. Filmbeiträge (Events) identifiziert werden können. Die verknüpften Informationen werden als Eventindex 153 in einem zweiten Speicherbereich der HD 160 aufgezeichnet.

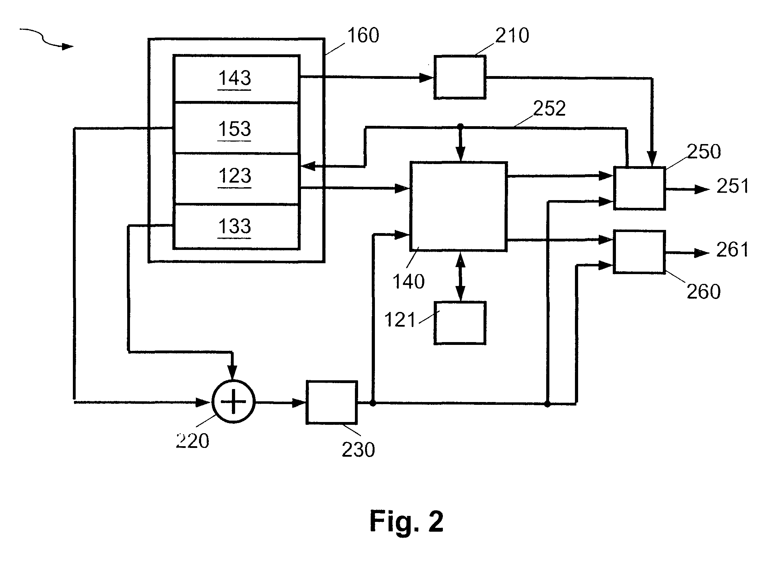

Figur 2 zeigt ein Prinzipschaltbild eines Ausführungsbeispiels einer Vorrichtung 200 zur Aufzeichnung und Wiedergabe von digitalen audiovisuellen Daten, bei der Wiedergabe codierter digitaler audiovisueller Daten. Das Speichermedium (HD) 160 entspricht dem oben im Zusammenhang mit Figur 1 beschriebenen Speichermedium 160, mit der beschriebenen Aufteilung in vier Bereiche. Bei der Wiedergabe werden die Programmdaten 123 aus dem dritten Bereich der HD 160 ausgelesen, an den - bereits oben erwähnten - Demultiplexer 140 übergeben, der daraus Videodaten und Audiodaten demultiplext, also trennt. Die Videodaten werden an einen Videodecoder 250 übergeben, der daraus ein für die Wiedergabe auf einem Bildschirm geeignetes Videosignal 251 erzeugt. Die Audiodaten werden an einen Audiodecoder 260 übergeben, der daraus ein für die Wiedergabe mittels eines oder mehrerer Lautsprecher geeignetes Audiosignal 261 erzeugt, das z. B. auch ein Stereo- oder Surround-Signal sein kann.

Das Auslesen der Programmdaten 123 aus der HD wird bei normaler Wiedergabe durch die Auswertung der in den Programmdaten 123 enthaltenen Zeitstempel durch den Videodecoder 250 über eine Verbindung 252 gesteuert. Bei Wiedergabe in Sonderbetriebsarten - die später beschrieben werden - erfolgt die Steuerung durch die Auswertung der Indexinformationen des Bildindex 143, die dem Videodecoder 250 über einen Buffer 210 zur Verfügung gestellt werden.

Mittels einer Auswahleinrichtung 230, der über eine Verknüpfungseinrichtung 220 die Programminformationen 133 sowie die Informationen des Eventindex 153 zur Verfügung gestellt werden, können beispielsweise beliebige Filmbeiträge, Ausschnitte, bestimmte Stellen oder Bilder usw. ausgewählt und wiedergegeben werden. Die Auswahleinrichtung 230 steuert zur Wiedergabe direkt Demultiplexer 140, Videodecoder 250 und Audiodecoder 260 an. Dabei können auch aus den Programminformationen 133 und dem Eventindex 153 abgeleitete Informationen dargestellt werden, wie beispielsweise noch ausstehende Wiedergabezeit oder Speicherplatzbedarf eines Filmbeitrags. Ebenso kann aus den Programminformationen 133 und dem Eventindex 153 ein Inhaltsverzeichnis der aufgezeichneten Filmbeiträge ermittelt und dargestellt werden.

Weitere Informationen können beispielsweise aus den in den Programmdaten 123 enthaltenen Daten, wie Teletext, elektronische Programmzeitschrift, Datenbanken zu Sendebeiträgen, wie Texte zu Hörspielen, Informationen zu Filmen, Details zu Schauspielern usw., gewonnen werden. Diese können separat dargestellt werden oder auch zusammen mit den Video- und/oder Audiodaten der Programmdaten 123.

Bei der Wiedergabe in besonderen Wiedergabemodi muß für Bildlauf vorwärts und Bildlauf rückwärts unterschieden werden. Die Steuerung des Auslesen der Programmdaten 123 erfolgt in diesem Fall - wie oben angedeutet - durch Auswertung des Bildindex 143.

Für Wiedergabe in Zeitlupe bei Bildlauf vorwärts wird die Zeitspanne verlängert, während der ein Bild jeweils angezeigt wird. Eine Geschwindigkeit von 1/n*Normalgeschwindigkeit wird durch n-maliges Anzeigen des Bildes erreicht (n>1, n = ganze Zahl).

Für Pause bzw. Einzelbildfortschaltung bei Bildlauf vorwärts wird die automatische Bildfortschaltung durch den Videodecoder 250 über die Verbindung 252 unterbrochen. Das jeweils nächste Bild wird durch einen Benutzer über eine nicht dargestellte Eingabeeinrichtung angefordert und wiedergegeben. Es kann auch vorgesehen sein, das jeweils übernächste Bild, drittnächste Bild usw. wiederzugeben. Eine weitere Möglichkeit stellt eine Art "Dia-Show" dar. Dabei werden ausgewählte einzelne Bilder wiedergegeben, die gekennzeichnet wurden.

Die Wiedergabe der einzelnen Bilder kann automatisch für eine jeweils vorgegebene Zeitspanne erfolgen.

Für schnellen Vorlauf bei Bildlauf vorwärts wird jedes n-te Bild ausgelassen (n>1, n = ganze Zahl), wodurch sich eine n-fache Geschwindigkeit ergibt (Zeitraffer).

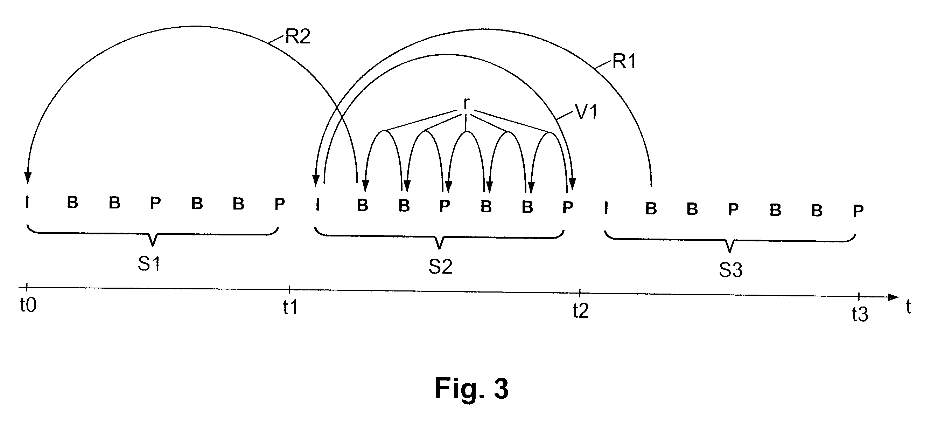

Bei nach MPEG codierten Daten können auch bestimmte Bilder übersprungen werden. Beispielsweise können in den in Figur 3 dargestellten Bildsequenzen S1 bis S3 jeweils die B-Bilder übersprungen werden. Da die B- und P-Bilder bei MPEG keine vollständige Bildinformation enthalten, kann es für die Wiedergabe dieser Bilder erforderlich sein, ein vorheriges Bild zu decodieren. Die Information diese vorherigen Bildes einer Bildsequenz, das z. B. ein I-Bild sein kann, wird dazu verwendet, die Bildinformation des z. B. wiederzugebenden B-Bilds zu vervollständigen.

Bei einer Wiedergabe in einem besonderen Wiedergabemodus ist es üblich, die Ausgabe eines Audiosignals zu unterdrücken, diese erfolgt nur bei Wiedergabe in Normalgeschwindigkeit. Für den schnellen Vorlauf kann es aber vorgesehen sein, Bruchteile des Audiosignals auszugeben.

Bei einer Wiedergabe mit Bildlauf rückwärts kann prinzipiell vorgegangen werden wie bei Bildlauf vorwärts bzw. Pause. Als Besonderheit ist jedoch bei codierten digitalen audiovisuellen Daten zu berücksichtigen, daß wegen der dabei einzuhaltenden Decodierungsreihenfolge keine kontinuierliche Decodierung möglich ist. Dies soll anhand der in Figur 3 dargestellten Bildsequenzen S1 bis S3 veranschaulicht werden, die einen Zeitraum von t0 bis t3 abdecken. Soll beispielsweise die Bildsequenz S2 rückwärts wiedergegeben werden, muß ein Sprung R1 zu ihrem Anfang I erfolgen. Die Daten der einzelnen Bilder I B B P B B P, oder einige der Bilder, werden in Vorwärtsrichtung V1 decodiert. Anschließend können die Bilder in Rückwärtsrichtung r wiedergegeben werden. Um die Wiedergabe in Rückwärtsrichtung fortsetzen zu können, muß schließlich, bevor der Anfang der Bildsequenz S2 während der Rückwärtswiedergabe erreicht wird, ein Sprung R2 zum Anfang der ersten Bildsequenz S1 erfolgen ― um wie oben für die zweite Bildsequenz S2 beschrieben ― eine Decodierung in Vorwärtsrichtung vornehmen zu können.

Es ist offensichtlich, daß insbesondere für den letzten Anwendungsfall der Bildindex 143 mit den oben beschriebenen codierungsspezifischen Informationen von Bedeutung ist, um gezielt beispielsweise den Anfang einer Bildsequenz für die Decodierung anzusteuern. Darüber hinaus erlaubt die Verwendung des Bildindex 143 schnelle Wiedergabe, d. h. Vor- oder Rücklauf mit erhöhter Geschwindigkeit, ohne Störungen in den wiedergegebenen Bildern, sowie störungsfreien und nahtlosen Übergang von einer Wiedergabegeschwindigkeit bzw. Wiedergaberichtung in die andere.

Um besondere Bearbeitungstechniken für die codierten digitalen audiovisuellen Daten zu ermöglichen, wie z. B. gleichzeitiges Aufnehmen und Wiedergeben, Schneiden von zwei oder mehr Programmen bzw. Filmbeiträgen usw., ist die Einrichtung 121 (Figur 1 und 2) zur Rückgewinnung des Systemtakts flexibel ausgelegt. Bei einer Aufnahme erfolgt eine Synchronisation des Systemtakts auf den Takt der Aufnahmequelle. Die Wiedergabe kann unsynchronisiert erfolgen. Soll gleichzeitig aufgenommen und wiedergegeben werden, erfolgt die Synchronisierung durch die Einrichtung 121 auf den Takt der Aufnahmequelle. Dies gilt auch, wenn Aufnahme und zeitversetztes Wiedergeben einer Aufnahmequelle erfolgt. Werden gleichzeitig zwei Aufnahmen vorgenommen, wird auf eine der Aufnahmequellen synchronisiert. Im Fall des Schneidens (Mischens) eines wiedergegebenen Signals mit einer externen Quelle erfolgt eine Synchronisation auf den Takt der externen Quelle.

Die oben erwähnte Möglichkeit von Aufnahme und zeitversetzter Wiedergabe ermöglicht es beispielsweise, falls aktuell gesehene Sendungen immer automatisch aufgenommen werden, während einer laufenden Sendung zurückzuspulen und die Sendung zeitversetzt zu Ende zu sehen. Bei einer derartigen automatischen Aufzeichnung ist es auch möglich, die Sendung, falls es gewünscht wird, nachträglich dauerhaft in der HD 160 zu belassen.

Durch die Verwendung des Bildindex 143 wird es auch möglich, nachträglich aufgezeichnete Programmdaten 123 zu verändern. Beispielsweise können Schriften oder Bilder mittels eines On Screen Displays (OSD) zeitgenau in die gewünschten Bilder der Programmdaten 123 eingeblendet werden. Die Schriften oder Bilder für das OSD können ebenfalls auf der HD 160 gespeichert werden. Ebenso können Tonsignale in die in den Programmdaten 123 enthaltenen Audiosignale gemischt werden. Weiterhin ist es möglich, bestimmte Sendeinhalte oder Abschnitte, wie z. B. Werbung, vollständig auszublenden. Dies kann durch Veränderung des Bildindex 143 erfolgen, indem die Speicheradressen der entsprechenden Programmdaten 123 gelöscht werden oder durch Auswertung der Programminformation 133 bzw. des Eventindex 153 bei der Wiedergabe.

Neben der oben beschriebenen Aufteilung des Speichermediums 160 sind andere Speicheraufteilungen möglich. Beispielsweise können die Bereiche 123 bis 153 jeweils getrennt für einen Filmbeitrag angelegt werden, so daß beispielsweise die Daten eines Filmbeitrags an die Daten eines anderen anschließen. Die Bereiche 123 bis 153 können aber auch derart angelegt werden, daß innerhalb der einzelnen Bereiche die Daten eines Filmbeitrags für diesen Bereich an die Daten eines nachfolgend aufgezeichneten Filmbeitrags angrenzen.

Weiterhin kann das Speichermedium 160 in einen Langzeitspeicher und einen Kurzzeitspeicher aufgeteilt sein. Der Kurzzeitspeicher wird dann beispielsweise dazu verwendet ― wie oben beschrieben ― alle Film- oder Sendebeiträge automatisch aufzuzeichnen. Falls nachträglich entschieden wird, daß der Sendebeitrag dauerhaft gespeichert werden soll, wird dieser in den Langzeitspeicher verschoben. Dies kann durch eine tatsächliche Verschiebung des Sendebeitrags oder durch eine Verschiebung der Speicheradressen vom Kurzzeitspeicher in den Langzeitspeicher erfolgen. Für bestimmte Bereiche des Kurzzeit- und/oder Langzeitspeichers kann ein Löschschutz vorgesehen sein bzw. von einem Benutzer vorgesehen werden, um z. B. bestimmte Filmbeiträge dauerhaft zu erhalten.

Je nach Platzbedarf von Kurzzeit- und/oder Langzeitspeicher kann eine dynamische Anpassung der Größe des jeweiligen Speicherbereichs im Speichermedium 160 vorgesehen sein. Eine weitere Möglichkeit ist es, beispielsweise bei Überschreiten einer vorgegebenen Größe des Kurzzeitspeichers, automatisch den ältesten Sendebeitrag oder den, der am längsten nicht mehr wiedergegeben wurde, zu löschen.

Werden, wie beschrieben, MPEG-codierte digitale audiovisuelle Daten aufgezeichnet und wiedergegeben, muß der Decoder 140 innerhalb von 40 ms (Zeitdauer eines Vollbilds) drei Bilder (I+P+B) decodieren können und einen Speicher aufweisen, der vier Vollbilder zwischenspeichern kann, um insbesondere die Anforderungen der oben beschriebenen besonderen Wiedergabemodi erfüllen zu können.

Die oben anhand von MPEG-codierten digitalen audiovisuellen Daten beschriebene Vorrichtung zur Aufnahme und Wiedergabe kann entsprechend auch nur für codierte digitale Audiodaten verwendet werden, um beispielsweise Radioprogramme aufzuzeichnen und wiederzugeben.

## Patentansprüche

1. Vorrichtung zur Aufzeichnung und Wiedergabe von digitalen audiovisuellen Daten (110), mit
einem Speichermedium (160), für die Aufzeichnung und Wiedergabe von in den digitalen audiovisuellen Daten (110) enthaltenen Programmdaten (123),
**dadurch gekennzeichnet, daß**
die digitalen audiovisuellen Daten (110) und die Programmdaten (123) codierte Daten sind,
eine Einrichtung (120, 140, 141) die Programmdaten (123) während der Aufzeichnung auf codierungsspezifische Informationen (143) hin analysiert,
die codierungsspezifischen Informationen (143) in dem Speichermedium (160) aufgezeichnet werden, wobei die codierungsspezifischen Informationen (143) eine Verknüpfung zu Speicheradressen der zugehörigen Programmdaten (123) aufweisen, und
eine Einrichtung (210, 250) die codierungsspezifischen Daten (143) für die Wiedergabe der Programmdaten (123) auswertet, um das Auslesen der Programmdaten (143) aus dem Speichermedium (160) zu steuern.

2. Vorrichtung nach Anspruch 1,
**dadurch gekennzeichnet, daß**
die codierungsspezifischen Daten (143) eine Bildart (I, B, P) und/oder eine Darstellungsdauer für jedes Bild der Programmdaten (123) bei der Wiedergabe enthalten.

3. Vorrichtung nach Anspruch 1 oder 2,
**dadurch gekennzeichnet, daß**
die digitalen audiovisuellen Daten (110) nach MPEG codiert sind.

4. Vorrichtung nach einem der Ansprüche 1 bis 3,
**dadurch gekennzeichnet, daß**
eine Einrichtung (120, 130, 150) vorgesehen ist, welche die Programmdaten (123) beschreibende Zusatzinformationen (133, 153) aus den codierten digitalen audiovisuellen Daten (110) ableitet,
die Zusatzinformationen (133, 153) im Speichermedium (160) aufgezeichnet werden, und
eine Einrichtung (220, 230) vorhanden ist, welche die Zusatzinformationen (133, 153) auswertet, um die Auswahl bestimmter Programmdaten (123) für die Wiedergabe zu ermöglichen.

5. Vorrichtung nach einem der Ansprüche 1 bis 4,
**dadurch gekennzeichnet, daß**
die Vorrichtung die codierten digitalen audiovisuellen Daten (110) ständig aufzeichnet.

6. Verfahren zur Aufzeichnung und Wiedergabe von digitalen audiovisuellen Daten (110), für die Aufzeichnung und Wiedergabe von in den digitalen audiovisuellen Daten (110) enthaltenen Programmdaten (123),
**dadurch gekennzeichnet, daß**
die digitalen audiovisuellen Daten (110) und die Programmdaten (123) codierte Daten sind,
die Programmdaten (123) während der Aufzeichnung auf codierungsspezifische Informationen (143) hin analysiert werden,
die codierungsspezifischen Informationen (143) aufgezeichnet werden, wobei die codierungsspezifischen Informationen (143) eine Verknüpfung zu den zugehörigen Programmdaten (123) aufweisen, und
die codierungsspezifischen Daten (143) für die Wiedergabe der Programmdaten (123) auswertet werden, um das Auslesen der Programmdaten (143) zu steuern.

7. Verfahren nach Anspruch 6,
**dadurch gekennzeichnet, daß**
die codierungsspezifischen Daten (143) eine Bildart (I, B, P) und/oder eine Darstellungsdauer für jedes Bild bei der Wiedergabe enthalten.

8. Verfahren nach Anspruch 6 oder 7,
**dadurch gekennzeichnet, daß**
die digitalen audiovisuellen Daten (110) nach MPEG codiert sind.

9. Verfahren nach einem der Ansprüche 6 bis 8,
**dadurch gekennzeichnet, daß**
aus den codierten digitalen audiovisuellen Daten (110) die Programmdaten (123) beschreibende Zusatzinformationen (133, 153) abgeleitet werden,
die Zusatzinformationen (133, 153) aufgezeichnet werden, und
die Zusatzinformationen (133, 153) auswertet werden, um die Auswahl bestimmter Programmdaten (123) für die Wiedergabe zu ermöglichen.

10. Verfahren nach einem der Ansprüche 6 bis 9,
**dadurch gekennzeichnet, daß**
die codierten digitalen audiovisuellen Daten (110) ständig aufzeichnet werden.
